# EUROPEAN PATENT SPECIFICATION

(11) **EP 3 952 559 B1**
(45) Date of publication and mention of the grant of the patent: **18.11.2026**
(21) Application number: 20783527.3
(22) Date of filing: 27.03.2020
(51) Int. Cl.: H04L 1/1822, H04L 1/1829, H04L 1/1867

(54) **PROCESSING METHODS FOR HARQ MECHANISM AND TERMINAL**
VERARBEITUNGSVERFAHREN FÜR HARQ-MECHANISMUS UND ENDGERÄT
PROCÉDÉS DE TRAITEMENT POUR MÉCANISME HARQ ET TERMINAL

(30) Priority: 29.03.2019 CN 201910248657
(43) Date of publication of application: 09.02.2022
(73) Proprietor: Datang Mobile Communications Equipment Co., Ltd., Beijing 100083 (CN)
(72) Inventor: XING, Yanping, Beijing 100191 (CN); MIAO, Deshan, Beijing 100191 (CN)
(74) Representative: dompatent
(86) International application number: PCT/CN2020/081671
(87) International publication number: WO 2020/200088

(56) References cited:
- CN-A- 102 223 219
- CN-A- 105 978 671
- US-A1- 2015 117 337
- INTERDIGITAL INC: "Deactivating HARQ for Non-Terrestrial Networks", vol. RAN WG1, no. Sanya, China; 20180416 - 20180420, 15 April 2018 (2018-04-15), XP051427120, Retrieved from the Internet <URL:http://www.3gpp.org/ftp/Meetings%5F3GPP%5FSYNC/RAN1/Docs/> [retrieved on 20180415]
- MEDIATEK INC.: "Summary of 7.2.5.4 on more delay-tolerant re-transmission mechanisms in NR-NTN", 3GPP TSG RAN WG1 MEETING #99 R1-1913327, 22 November 2019 (2019-11-22), XP051830611, DOI: 20200609110857PX
- INTERDIGITAL INC.: "Considerations on HARQ Management for Non-Terrestrial Networks", 3GPP TSG RAN WG1 MEETING #92 R1-1802631, 2 March 2018 (2018-03-02), XP051398069, DOI: 20200609111204X
- HUAWEI ET AL.: "Further discussion on MAC impacts in NTN", 3GPP TSG-RAN WG2 MEETING #104 R2-1818247, 16 November 2018 (2018-11-16), XP051557748, DOI: 20200609111007X

## Description

### TECHNICAL FIELD

The present disclosure relates to the field of communications technology, in particular to a method for processing a Hybrid Automatic Repeat reQuest (HARQ) mechanism, a method for indicating an HARQ mechanism, a terminal and a network side device.

### BACKGROUND

Due to an HARQ mechanism, which has been widely used in a mobile communications network, link performance is improved through receiver combining, so as to improve spectrum efficiency of a system. In addition, due to the existence of a plurality of parallel HARQ processes, data transmission is performed through the other HARQ processes within a Round-Trip Time (RTT) of one HARQ process, so as to improve a transmission rate.

For a ground cellular system, a cell has a relatively small radius, a transmission delay is not large, and the RTT principally depends on a duration of a physical channel as well as a processing time of a transmitter and a receiver. As a significant difference between a satellite communications system and the ground cellular system, there is a very large distance between a terminal and a network in the satellite communications system, so the transmission delay is very large and becomes a main factor that adversely influences the RTT. Hence, the quantity of HARQ processes, e.g., dozens of or hundreds of processes, in the satellite communications system is much larger than the quantity of HARQ processes in the ground cellular system. One issue caused by the large quantity of HARQ processes lies in that a size of a cache at the receiver increases linearly.

In order to solve the problem that the quantity of HARQ processes in the satellite communications system is too large, one scheme includes deactivating an HARQ. The deactivation of the HARQ refers to that the HARQ mechanism is not adopted at a physical layer, which includes not performing HARQ-Acknowledgement (ACK) feedback on a data packet at the receiver, not performing HARQ repetition on the data packet at the transmitter, and correspondingly, not performing HARQ combining at the receiver. The HARQ is deactivated semi-statically or dynamically. In a mode where the HARQ is deactivated semi-statically, the HARQ mechanism is not adopted by the terminal with respect to all the data packets within a certain time period. In a mode where the HARQ mechanism is deactivated dynamically, whether the HARQ mechanism is adopted is selected by the transmitter dynamically with respect to each data packet. As compared with the mode where the HARQ mechanism is deactivated semi-statically, the mode where the HARQ mechanism is deactivated dynamically is more flexible. However, how to deactivate the HARQ mechanism dynamically is still under study, and there is currently no definite scheme.

INTERDIGITAL INC: "Deactivating HARO for Non-Terrestrial Networks", 3GPP DRAFT; R1-1804857 DEACTIVATING HARO FOR NON-TERRESTRIAL NETWORKS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; vol. RAN WG1, no. Sanya, China; 20180416 - 20180420 15 April 2018 (2018-04-15)) discusses different ways of deactivating HARQ for non-terrestrial networks.

### SUMMARY

An object of the present disclosure is to provide a method for processing an HARQ mechanism, a method for indicating an HARQ mechanism, a terminal and a network side device, so as to solve the problem in the related art where the mode where the HARQ mechanism is deactivated is less flexible. The invention is set out in the appended set of claims.

The present disclosure at least has the following beneficial effect:
according to the methods for processing and indicating the HARQ mechanism, the terminal and the network side device in the embodiments of the present disclosure, whether an HARQ function is activated or deactivated for the data packet scheduled by the scheduling information is indicated dynamically through the scheduling information, so it is able for each data packet to dynamically select whether to adopt the HARQ mechanism, thereby to improve the transmission flexibility of the data packet.

### BRIEF DESCRIPTION OF THE DRAWINGS

Fig.1 is a flow chart of a method for processing an HARQ mechanism according to an embodiment of the present disclosure;
Fig.2 is a flow chart of a method for indicating an HARQ mechanism according to an embodiment of the present disclosure;
Fig.3 is a schematic view showing a terminal and a network side device according to an embodiment of the present disclosure;
Fig.4 is a schematic view showing a device for processing an HARQ mechanism according to an embodiment of the present disclosure; and
Fig.5 is a schematic view showing a device for indicating an HARQ mechanism according to an embodiment of the present disclosure.

### DETAILED DESCRIPTION

In order to make the objects, the technical solutions and the advantages of the present disclosure more apparent, the present disclosure will be described hereinafter in conjunction with the drawings and embodiments. The present invention is defined by the attached independent claims. Advantageous embodiments are described in the attached dependent claims. Embodiments and/or examples mentioned in the description that do not fall under the scope of the claims are useful for understanding the present invention.

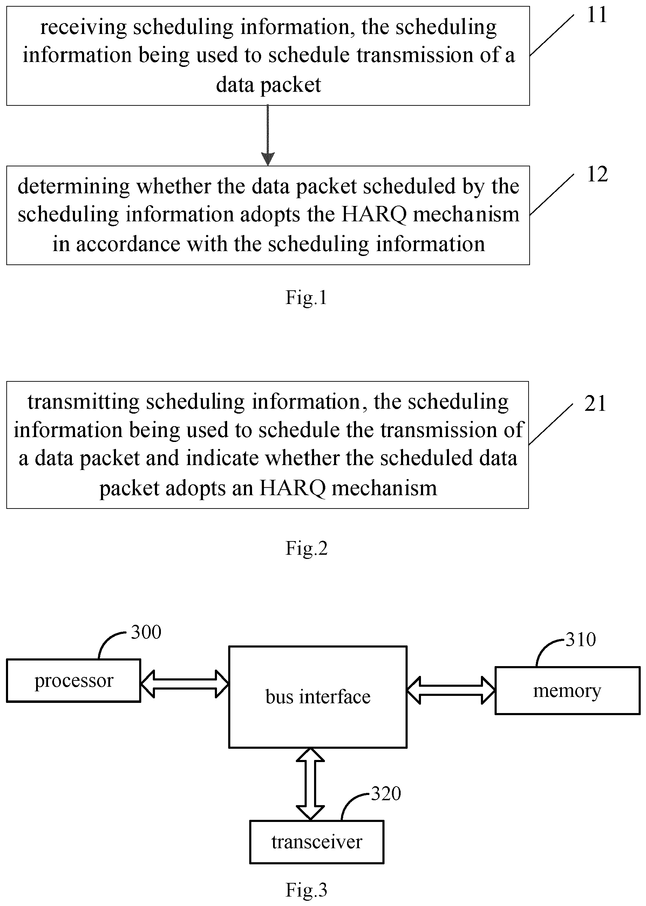

As shown in Fig.1, the present disclosure provides in some embodiments a method for processing an HARQ mechanism for a terminal, which includes:
Step 11 of receiving scheduling information, the scheduling information being used to schedule transmission of a data packet;
Step 12 of determining whether the data packet scheduled by the scheduling information adopts the HARQ mechanism in accordance with the scheduling information.

In a possible embodiment of the present disclosure, the scheduling information may be Downlink Control Information (DCI) or Sidelink Control Information (SCI), which will not be particularly defined herein.

In the case that the data packet scheduled by the scheduling information does not adopt the HARQ mechanism, a receiver receiving the data packet does not perform HARQ feedback (HARQ-Acknowledgement (HARQ-ACK) or HARQ-Negative Acknowledgement (HARQ-NACK)), and a transmitter does not perform HARQ repetition with respect to the data packet.

In the case that the data packet scheduled by the scheduling information adopts the HARQ mechanism, the receiver performs the HARQ feedback (HARQ-ACK or HARQ-NACK) corresponding to the data packet, and the transmitter performs the HARQ repetition with respect to the data packet.

In a possible embodiment of the present disclosure, the scheduling information includes a first bit field for indicating that an HARQ is to be activated or deactivated;
correspondingly, Step 12 includes:
in the case that the first bit field indicates that the HARQ is to be activated, determining that the data packet scheduled by the scheduling information adopts the HARQ mechanism; and
in the case that the first bit field indicates that the HARQ is to be deactivated, determining that the data packet scheduled by the scheduling information does not adopt the HARQ mechanism.

For example, the scheduling information includes one bit field (i.e., the first bit field) for indicating whether the HARQ is to be deactivated. For example, one bit in the DCI is used, and two values ('0' and '1') are used to represent that the HARQ is to be activated and that the HARQ is to be deactivated respectively. The receiver determines whether to activate the HARQ in accordance with the value of the bit field. When the DCI indicates that the HARQ is to be deactivated, the HARQ mechanism is not adopted, and the receiver does not feed back the HARQ-ACK corresponding to the data packet and does not cache the data packet. When the DCI indicates that the HARQ is to be activated, the HARQ mechanism is adopted, and the receiver feeds back the HARQ-ACK corresponding to the data packet. In addition, when decoding is performed unsuccessfully, the data packet is cached into a cache corresponding to an HARQ process indicated by the scheduling information for the subsequent repetition combining.

Further, preferably, when the DCI indicates that the HARQ is to be deactivated, an information field in the DCI associated with the HARQ, e.g., an HARQ process number, redundancy version information, a new data indicator and/or a feedback channel indicator, is redefined for the other uses.

In another possible embodiment of the present disclosure, the scheduling information includes a second bit field for indicating an HARQ process number;
correspondingly, Step 12 includes:
in the case that a value of the second bit field is a preset target value indicating that the HARQ is to be deactivated, determining that the data packet scheduled by the scheduling information does not adopt the HARQ mechanism; and
in the case that the value of the second bit field is not the target value, determining that the data packet scheduled by the scheduling information adopts the HARQ mechanism.

In a possible embodiment of the present disclosure, the method further includes:
obtaining a scrambling value for scrambling the scheduling information;
in the case that the scrambling value is a preset value, when the value of the second bit field is the target value, determining that the data packet scheduled by the scheduling information does not adopt the HARQ mechanism, and when the value of the second bit field is not the target value, determining that the data packet scheduled by the scheduling information adopts the HARQ mechanism; and in the case that the scrambling value is not the preset value, determining that the data packet scheduled by the scheduling information adopts the HARQ mechanism.

To be specific, the determining whether the data packet scheduled by the scheduling information adopts the HARQ mechanism in accordance with the value of the second bit field includes:
in the case that the value of the second bit field is the preset target value indicating that the HARQ is to be deactivated, determining that the data packet scheduled by the scheduling information does not adopt the HARQ mechanism; and
in the case that the value of the second bit field is not the target value, determining that the data packet scheduled by the scheduling information does not adopt the HARQ mechanism.

In other words, a specific value (i.e., the target value) of the second bit field in the scheduling information for indicating the HARQ process number is used to indicate that the HARQ is to be deactivated. When the HARQ process number indicated by the scheduling information is the specific value, the HARQ mechanism is not adopted, and the receiver does not feed back the HARQ-ACK corresponding to the data packet and does not cache the data packet. When the HARQ process number indicated by the scheduling information is not the specific value, the HARQ mechanism is adopted, and the receiver feeds back the HARQ-ACK corresponding to the data packet. In addition, when decoding is performed unsuccessfully, the data packet is cached into a cache corresponding to the HARQ process indicated by the scheduling information for subsequent repetition combining.

For example, it is agreed that the HARQ is to be deactivated when the bit field in the DCI for indicating the HARQ process number is in an all-zero state, i.e., the HARQ process number is 0, and at this time, one HARQ process is used to indicate the transmission where the HARQ mechanism is not adopted. Presumed that 500 HARQ processes are required to support continuous scheduling in accordance with an RTT and a Transmission Time Interval (TTI), the quantity of HARQ processes is configured at a network side, and whether the HARQ processes include a process not adopting the HARQ mechanism and corresponding to a value for indicating the deactivation of the HARQ is pre-agreed. When the configured HARQ processes include the process not adopting the HARQ mechanism and corresponding to the value for indicating the deactivation of the HARQ, the quantity of processes supporting the HARQ mechanism is the quantity of HARQ processes configured at the network side minus 1. Otherwise, the quantity of processes supporting the HARQ mechanism is equal to the quantity of HARQ processes configured at the network side.

When the HARQ processes configured at the network side include the process not adopting the HARQ mechanism and corresponding to the value for indicating the deactivation of the HARQ, and the quantity of HARQ processes configured at the network side is 501, 9 bits in the DCI are used to indicate the HARQ process. At the network side, the HARQ mechanism is adopted for all the HARQ processes, or the HARQ mechanism is not adopted for a part of the HARQ processes. At this time, the second bit field for indicating the HARQ process number is set as all zeroes.

When the HARQ processes configured at the network side include the process not adopting the HARQ mechanism and corresponding to the value for indicating the deactivation of the HARQ, and the quantity of HARQ processes configured at the network side is 256, 8 bits in the DCI are used to indicate the HARQ process. Within one RTT, at most 255 HARQ processes support the HARQ mechanism, and for the other HARQ processes, the bit field for indicating the HARQ process numbers is set as all zeroes, so as to indicate the transmission where the HARQ mechanism is deactivated.

When the HARQ processes configured at the network side do not include the process not adopting the HARQ mechanism and corresponding to the value for indicating the deactivation of the HARQ, the quantity of HARQ processes indicated by the DCI is at least equal to the quantity of HARQ processes configured at the network side plus 1. When the quantity of HARQ processes configured at the network side is 255, 8 bits in the DCI are used to indicate the HARQ process. Within one RTT, at most 255 HARQ processes support the HARQ mechanism, and for the other HARQ processes, the bit field for indicating the HARQ process numbers is set as all zeroes, so as to indicate the transmission where the HARQ mechanism is deactivated.

In a possible embodiment of the present disclosure, when the HARQ process is the target value, i.e., when the HARQ mechanism is not adopted, the information field in the DCI associated with the HARQ, e.g., the redundancy version information, the new data indicator and/or the feedback channel indicator, is redefined for the other uses.

Further, considering that the HARQ process with a process number of 0 is probably used for semi-persistent scheduled or configured transmission, prior to determining whether the HARQ process numbers indicated in the scheduling information are all zeroes, an RNTI of the scrambled scheduling information is determined. In the case that the RNTI is a specific value, whether the HARQ is to be deactivated is determined in accordance with whether the HARQ process numbers indicated in the scheduling information are all zeroes; otherwise, the HARQ is to be activated by default. For example, when the RNTI is a Cell-RNTI (C-RNTI), whether the HARQ is to be deactivated is determined in accordance with whether the HARQ process numbers indicated in the scheduling information are all zeroes, and when the RNTI is a Configured Scheduling-RNTI (CS-RNTI), the HARQ is to be activated by default.

Alternatively, in order to prevent the occurrence of a conflict in the process numbers for the semi-persistent scheduled or configured transmission, the HARQ is indicated to be deactivated when the bit field for indicating the HARQ process number is in an all-one state. At the network side, the quantity of HARQ processes for the semi-persistent scheduled or configured transmission is set to be smaller than the total quantity of HARQ processes, so as to prevent the HARQ process numbers from being all ones.

In another possible embodiment of the present disclosure, Step 12 includes:
obtaining an HARQ process indicated by the scheduling information, wherein the scheduling information includes a bit field indicating a HARQ process number;
in the case that the HARQ process indicated by the scheduling information belongs to an HARQ process set for activating the HARQ, determining that the data packet scheduled by the scheduling information adopts the HARQ mechanism;
in the case that the HARQ process indicated by the scheduling information belongs to an HARQ process set for deactivating the HARQ, determining that the data packet scheduled by the scheduling information does not adopt the HARQ mechanism.

Correspondingly, the method further includes obtaining any of the following information configured semi-statically:
an HARQ process number in the HARQ process set for activating the HARQ and an HARQ process number in the HARQ process set for deactivating the HARQ;
an HARQ process number in the HARQ process set for activating the HARQ;
an HARQ process number in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set.

At the network side, the HARQ processes are divided into two sets. An HARQ function for the HARQ processes in one set is deactivated, and the HARQ function for the HARQ processes in the other set is activated. In a possible embodiment of the present disclosure, the HARQ process sets are divided semi-statically. The receiver determines whether to activate or deactivate the HARQ function in accordance with the set to which the HARQ process number belongs.

To be specific, the network side divides the sets in accordance with the HARQ process numbers or the quantity of HARQ processes, e.g., notifies the HARQ processes in each set, or notifies all HARQ processes in one set (the other HARQ processes belong to the other set), or notifies the quantity of HARQ processes in one set and determines the HARQ processes corresponding to the set using a predefined rule (the other HARQ processes belong to the other set), or notifies the quantity of HARQ processes in each set.

For example, when the network side device determines that 500 HARQ processes are required to support continuous scheduling in accordance with the RTT and the TTI, the network side notifies the HARQ process set for activating the HARQ and the HARQ process set for deactivating the HARQ. Alternatively, the network side notifies the HARQ process set for activating the HARQ, and the other HARQ processes belong to the HARQ process set for deactivating the HARQ, and vice versa. Alternatively, the network side notifies the quantity of HARQ processes for activating the HARQ, e.g., M. At this time, the HARQ processes 0 to M-1 are HARQ processes for activating the HARQ function, and the other HARQ processes are processes for deactivating the HARQ function, and vice versa. Alternatively, the network side notifies the quantity of HARQ processes for activating the HARQ, e.g., M, and at this time, the HARQ processes 0 to M-1 are HARQ processes for activating the HARQ. The network side notifies the quantity of HARQ processes for deactivating the HARQ, e.g., N, and at this time, the HARQ processes 499-N to 499 are HARQ processes for deactivating the HARQ function, and vice versa.

The network side further divides the sets through configuring the maximum quantity of transmission times for the HARQ processes. For example, the maximum quantity of transmission times is configured for each HARQ process or a group of HARQ processes. When the maximum quantity of transmission times configured for the HARQ process is 1, it means that the HARQ process belongs to the set for deactivating the HARQ function. To be specific, when the maximum quantity of transmission times for the HARQ processes 0 to N is configured by the network side as 1 and the maximum quantity of transmission times for the other HARQ processes is 8, the HARQ processes 0 to N belong to the HARQ process set for deactivating the HARQ, and the other HARQ processes belong to the HARQ process set for activating the HARQ.

In a possible embodiment of the present disclosure, the receiver divides an HARQ cache in accordance with the quantity of HARQ processes for activating the HARQ.

In a possible embodiment of the present disclosure, for the HARQ process for activating the HARQ, the information field in the scheduling information associated with the HARQ, e.g., the redundancy version information, the new data indicator and/or the feedback channel indicator, is redefined for the other uses.

In yet another possible embodiment of the present disclosure, Step 12 includes:
determining whether the data packet scheduled by the scheduling information adopts the HARQ mechanism in accordance with a scrambling value for scrambling the scheduling information. For example, two different RNTIs are used, with one corresponding to a situation where the HARQ mechanism is to be activated and the other corresponding to a situation where the HARQ mechanism is to be deactivated. Whether the HARQ mechanism is to be activated is implicitly indicated through the RNTI scrambling the DCI.

Alternatively, Step 12 includes:
determining whether the data packet scheduled by the scheduling information adopts the HARQ mechanism in accordance with a search space where the scheduling information is located. For example, for each search space, it is configured or agreed that the DCI corresponds to a situation where the HARQ mechanism is to be activated or deactivated. Whether the HARQ mechanism is to be activated is implicitly indicated through the search space where the DCI is located.

Alternatively, Step 12 includes:
determining whether the data packet scheduled by the scheduling information adopts the HARQ mechanism in accordance with a format of the scheduling information. For example, different DCI formats are defined for the situation where the HARQ mechanism is to be activated and the situation where the HARQ mechanism is to be deactivated, and a User Equipment (UE) performs blind detection on the different DCI formats. Whether the HARQ mechanism is to be activated is implicitly indicated through the DCI format.

Alternatively, Step 12 includes:
determining whether the data packet scheduled by the scheduling information adopts the HARQ mechanism in accordance with a length of the scheduling information. For example, for the scheduling where the HARQ function is to be activated, the length of the DCI is designed as S1, and for the scheduling where the HARQ function is to be deactivated, the length of the DCI is designed as S2. An information field associated with the HARQ, e.g., an HARQ process indicator, a new data indicator, a redundancy version indicator and a feedback channel indicator, may be deleted. Hence, typically, S1>S2. The terminal performs blind detection in accordance with the two DCI lengths. When the DCI has been decoded correctly, the terminal determines whether the HARQ function is activated for a current data packet in accordance with the DCI length.

In brief, whether the HARQ is to be deactivated is implicitly indicated through the RNTI for scrambling the scheduling information, the search space where the scheduling information is located, the format of the scheduling information or the length of the scheduling information.

In a word, whether the HARQ function is activated or deactivated for the data packet scheduled by the scheduling information is indicated dynamically through the scheduling information. As a result, it is able for each data packet to dynamically select whether to adopt the HARQ mechanism, thereby to improve the transmission flexibility of the data packet.

As shown in Fig.2, the present disclosure further provides in some embodiments a method for indicating an HARQ mechanism for a network side device, which includes:
Step 21 of transmitting scheduling information, the scheduling information being used to schedule the transmission of a data packet and indicate whether the scheduled data packet adopts an HARQ mechanism.

In a possible embodiment of the present disclosure, the scheduling information may be DCI or SCI, which will not be particularly defined herein.

In the case that the data packet scheduled by the scheduling information does not adopt the HARQ mechanism, a receiver receiving the data packet does not perform HARQ feedback (HARQ-ACK or HARQ-NACK) on the data packet, and a transmitter does not perform HARQ repetition with respect to the data packet.

In the case that the data packet scheduled by the scheduling information adopts the HARQ mechanism, the receiver performs the HARQ feedback (HARQ-ACK or HARQ-NACK) corresponding to the data packet, and the transmitter performs the HARQ repetition with respect to the data packet.

In a possible embodiment of the present disclosure, the scheduling information includes a first bit field for indicating that an HARQ is to be activated or deactivated;
in the case that the first bit field indicates that the HARQ is to be activated, the data packet scheduled by the scheduling information adopts the HARQ mechanism;
in the case that the first bit field indicates that the HARQ is to be deactivated, the data packet scheduled by the scheduling information does not adopt the HARQ mechanism.

For example, the scheduling information includes one bit field (i.e., the first bit field) for indicating whether the HARQ is to be deactivated. For example, one bit in the DCI is used, and two values ('0' and '1') are used to represent that the HARQ is to be activated and that the HARQ is to be deactivated respectively. The receiver determines whether to activate the HARQ in accordance with the value of the bit field. When the DCI indicates that the HARQ is to be deactivated, the HARQ mechanism is not adopted, and the receiver does not feed back the HARQ-ACK corresponding to the data packet and does not cache the data packet. When the DCI indicates that the HARQ is to be activated, the HARQ mechanism is adopted, and the receiver feeds back the HARQ-ACK corresponding to the data packet. In addition, when decoding is performed unsuccessfully, the data packet is cached into a cache corresponding to an HARQ process indicated by the scheduling information for the subsequent repetition combining.

Further, when the DCI indicates that the HARQ is to be deactivated, an information field in the DCI associated with the HARQ, e.g., an HARQ process number, redundancy version information, a new data indicator and/or a feedback channel indicator, may be redefined for the other uses.

In another possible embodiment of the present disclosure, the scheduling information includes a second bit field for indicating an HARQ process number;
in the case that a value of the second bit field is a preset target value indicating that the HARQ is to be deactivated, the data packet scheduled by the scheduling information does not adopt the HARQ mechanism; and
in the case that the value of the second bit field is not the target value, the data packet scheduled by the scheduling information adopts the HARQ mechanism.

In other words, a specific value (i.e., the target value) of the second bit field in the scheduling information for indicating the HARQ process number is used to indicate that the HARQ is to be deactivated. When the HARQ process number indicated by the scheduling information is the specific value, the HARQ mechanism is not adopted, and the receiver does not feed back the HARQ-ACK corresponding to the data packet and does not cache the data packet. When the HARQ process number indicated by the scheduling information is not the specific value, the HARQ mechanism is adopted, and the receiver feeds back the HARQ-ACK corresponding to the data packet. In addition, when decoding is performed unsuccessfully, the data packet is cached into a cache corresponding to the HARQ process indicated by the scheduling information for subsequent repetition combining.

Further, considering that the HARQ process with a process number of 0 is probably used for semi-persistent scheduled or configured transmission, prior to determining whether the HARQ process numbers indicated in the scheduling information are all zeroes, an RNTI of the scrambled scheduling information is determined. In the case that the RNTI is a specific value, whether the HARQ is to be deactivated is determined in accordance with whether the HARQ process numbers indicated in the scheduling information are all zeroes; otherwise, the HARQ is to be activated by default. For example, when the RNTI is a C-RNTI, whether the HARQ is to be deactivated is determined in accordance with whether the HARQ process numbers indicated in the scheduling information are all zeroes, and when the RNTI is a CS-RNTI, the HARQ is to be activated by default.

Alternatively, in order to prevent the occurrence of a conflict in the process numbers for the semi-persistent scheduled or configured transmission, the HARQ is indicated to be deactivated when the bit field for indicating the HARQ process number is in an all-one state. At the network side, the quantity of HARQ processes for the semi-persistent scheduled or configured transmission is set to be smaller than the total quantity of HARQ processes, so as to prevent the HARQ process numbers from being all ones.

In a possible embodiment of the present disclosure, when the HARQ process is the target value, i.e., the HARQ mechanism is not adopted, the information field in the DCI associated with the HARQ, e.g., the redundancy version information, the new data indicator and/or the feedback channel indicator, may be redefined for the other uses.

In a possible embodiment of the present disclosure, the method further includes semi-statically configuring any of the following information:
an HARQ process number in an HARQ process set for activating the HARQ and an HARQ process number in a second HARQ process set for deactivating the HARQ;
an HARQ process number in the HARQ process set for activating the HARQ;
an HARQ process number in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set;
in the case that the HARQ process indicated by the scheduling information belongs to the HARQ process set for activating the HARQ, the data packet scheduled by the scheduling information adopts the HARQ mechanism;
in the case that the HARQ process indicated by the scheduling information belongs to the HARQ process set for deactivating the HARQ, the data packet scheduled by the scheduling information does not adopt the HARQ mechanism.

At the network side, the HARQ processes are divided into two sets. An HARQ function for the HARQ processes in one set is deactivated, and the HARQ function for the HARQ processes in the other set is activated. In a possible embodiment of the present disclosure, the HARQ process sets are divided semi-statically. The receiver determines whether to activate or deactivate the HARQ function in accordance with the set to which the HARQ process number belongs.

To be specific, the network side divides the sets in accordance with the HARQ process numbers or the quantity of HARQ processes, e.g., notifies the HARQ processes in each set, or notifies all HARQ processes in one set (the other HARQ processes belong to the other set), or notifies the quantity of HARQ processes in one set and determines the HARQ processes corresponding to the set using a predefined rule (the other HARQ processes belong to the other set), or notifies the quantity of HARQ processes in each set.

For example, when the network side device determines that 500 HARQ processes are required to support continuous scheduling in accordance with the RTT and the TTI, the network side notifies the HARQ process set for activating the HARQ and the HARQ process set for deactivating the HARQ. Alternatively, the network side notifies the HARQ process set for activating the HARQ, and the other HARQ processes belong to the HARQ function for deactivating the HARQ, and vice versa. Alternatively, the network side notifies the quantity of HARQ processes for activating the HARQ, e.g., M. At this time, the HARQ processes 0 to M-1 are HARQ processes for activating the HARQ function, and the other HARQ processes are processes for deactivating the HARQ function, and vice versa. Alternatively, the network side notifies the quantity of HARQ processes for activating the HARQ, e.g., M, and at this time, the HARQ processes 0 to M-1 are HARQ processes for activating the HARQ function. The network side notifies the quantity of HARQ processes for deactivating the HARQ, e.g., N, and at this time, the HARQ processes 499-N to 499 are HARQ processes for deactivating the HARQ function, and vice versa.

The network side further divides the sets through configuring the maximum quantity of transmission times for the HARQ processes. For example, the maximum quantity of transmission times is configured for each HARQ process or a group of HARQ processes. When the maximum quantity of transmission times is 1, it means that the HARQ process belongs to the set for deactivating the HARQ function. To be specific, when the maximum quantity of transmission times for the HARQ processes 0 to N is configured by the network side as 1 and the maximum quantity of transmission times for the other HARQ processes is 8, the HARQ processes 0 to N belong to the HARQ process set for deactivating the HARQ, and the other HARQ processes belong to the HARQ process set for activating the HARQ.

In a possible embodiment of the present disclosure, the receiver divides an HARQ cache in accordance with the quantity of HARQ processes for activating the HARQ.

In a possible embodiment of the present disclosure, for the HARQ process for activating the HARQ, the information field in the scheduling information associated with the HARQ, e.g., the redundancy version information, the new data indicator and/or the feedback channel indicator, may be redefined for the other uses.

In a possible embodiment of the present disclosure, whether the data packet scheduled by the scheduling information adopts the HARQ mechanism is indicated through a scrambling value scrambling the scheduling information. For example, two different RNTIs are used, with one corresponding to a situation where the HARQ mechanism is to be activated and the other corresponding to a situation where the HARQ mechanism is to be deactivated. Whether the HARQ mechanism is to be activated is implicitly indicated through the RNTI scrambling the DCI.

Alternatively, whether the data packet scheduled by the scheduling information adopts the HARQ mechanism is indicated through a search space where the scheduling information is located. For example, for each search space, it is configured or agreed that the DCI corresponds to a situation where the HARQ mechanism is to be activated or deactivated. Whether the HARQ mechanism is to be activated is implicitly indicated through the search space where the DCI is located.

Alternatively, whether the data packet scheduled by the scheduling information adopts the HARQ mechanism is indicated through a format of the scheduling information. For example, different DCI formats are defined for the situation where the HARQ mechanism is to be activated and the situation where the HARQ mechanism is to be deactivated, and a UE performs blind detection on the different DCI formats. Whether the HARQ mechanism is to be activated is implicitly indicated through the DCI format.

Alternatively, whether the data packet scheduled by the scheduling information adopts the HARQ mechanism is indicated through a length of the scheduling information. For example, for the scheduling where the HARQ function is to be activated, the length of the DCI is designed as S1, and for the scheduling where the HARQ function is to be deactivated, the length of the DCI is designed as S2. An information field associated with the HARQ, e.g., an HARQ process indicator, a new data indicator, a redundancy version indicator and a feedback channel indicator, may be deleted. Hence, typically, S1>S2. The terminal performs blind detection in accordance with the two DCI lengths. When the DCI has been decoded correctly, the terminal determines whether the HARQ function is activated for a current data packet in accordance with the DCI length.

In a possible embodiment of the present disclosure, in the case that the data packet scheduled by the scheduling information does not adopt the HARQ mechanism, the method further includes:
configuring an information field associated with the HARQ in the scheduling information for other uses.

In a word, whether the HARQ function is activated or deactivated for the data packet scheduled by the scheduling information is indicated dynamically through the scheduling information. As a result, it is able for each data packet to dynamically select whether to adopt the HARQ mechanism, thereby to improve the transmission flexibility of the data packet.

As shown in Fig.3, the present disclosure further provides in some embodiments a terminal, which includes a transceiver 320, a memory 310, a processor 300, and a computer program stored in the memory 310 and executed by the processor 300;
the transceiver 320 is configured to receive scheduling information, the scheduling information is used to schedule the transmission of a data packet;
the processor 300 is configured to read the computer program in the memory so as to determine whether the data packet scheduled by the scheduling information adopts the HARQ mechanism in accordance with the scheduling information.

In a possible embodiment of the present disclosure, the scheduling information includes a first bit field for indicating that an HARQ is to be activated or deactivated;
the processor 300 is further configured to:
in the case that the first bit field indicates that the HARQ is to be activated, determine that the data packet scheduled by the scheduling information adopts the HARQ mechanism; and
in the case that the first bit field indicates that the HARQ is to be deactivated, determine that the data packet scheduled by the scheduling information does not adopt the HARQ mechanism.

In a possible embodiment of the present disclosure, the scheduling information includes a second bit field for indicating an HARQ process number;
the processor 300 is further configured to:
in the case that a value of the second bit field is a preset target value indicating that the HARQ is to be deactivated, determine that the data packet scheduled by the scheduling information does not adopt the HARQ mechanism; and
in the case that the value of the second bit field is not the target value, determine that the data packet scheduled by the scheduling information adopts the HARQ mechanism.

In a possible embodiment of the present disclosure, the processor 300 is further configured to:
obtain a scrambling value for scrambling the scheduling information;
in the case that the scrambling value is a preset value, when the value of the second bit field is the target value, the data packet scheduled by the scheduling information does not adopt the HARQ mechanism, and when the value of the second bit field is not the target value, the data packet scheduled by the scheduling information adopts the HARQ mechanism.

In a possible embodiment of the present disclosure, the processor 300 is further configured to:
obtain an HARQ process indicated by the scheduling information;
in the case that the HARQ process indicated by the scheduling information belongs to an HARQ process set for activating the HARQ, determine that the data packet scheduled by the scheduling information adopts the HARQ mechanism; and
in the case that the HARQ process indicated by the scheduling information belongs to an HARQ process set for deactivating the HARQ, determine that the data packet scheduled by the scheduling information does not adopt the HARQ mechanism.

In a possible embodiment of the present disclosure, the transceiver 320 is further configured to:
obtain any of the following information configured semi-statically:
an HARQ process number in the HARQ process set for activating the HARQ and an HARQ process number in the HARQ process set for deactivating the HARQ;
an HARQ process number in the HARQ process set for activating the HARQ;
an HARQ process number in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set.

In a possible embodiment of the present disclosure, the processor 300 is further configured to:
determine whether the data packet scheduled by the scheduling information adopts the HARQ mechanism in accordance with a scrambling value for scrambling the scheduling information; or
determine whether the data packet scheduled by the scheduling information adopts the HARQ mechanism in accordance with a search space where the scheduling information is located; or
determine whether the data packet scheduled by the scheduling information adopts the HARQ mechanism in accordance with a format of the scheduling information; or
determine whether the data packet scheduled by the scheduling information adopts the HARQ mechanism in accordance with a length of the scheduling information.

In a possible embodiment of the present disclosure, in the case that the data packet scheduled by the scheduling information does not adopt the HARQ mechanism, a receiver receiving the data packet does not perform HARQ feedback with respect to the data packet.

In a word, whether the HARQ function is activated or deactivated for the data packet scheduled by the scheduling information is indicated dynamically through the scheduling information. As a result, it is able for each data packet to dynamically select whether to adopt the HARQ mechanism, thereby to improve the transmission flexibility of the data packet.

It should be appreciated that, the terminal in the embodiments of the present disclosure is a terminal capable of executing the above-mentioned method for processing the HARQ mechanism, so all the embodiments involving the method are applicable to the terminal with a same or similar beneficial effect.

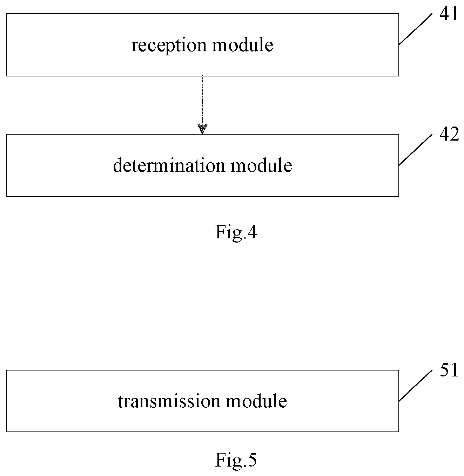

As shown in Fig.4, the present disclosure further provides in some embodiments a device for processing an HARQ mechanism for a terminal, which includes:
a reception module 41 configured to receive scheduling information, the scheduling information being used to schedule the transmission of a data packet; and
a determination module 42 configured to determine whether the data packet scheduled by the scheduling information adopts the HARQ mechanism in accordance with the scheduling information.

In a possible embodiment of the present disclosure, the scheduling information includes a first bit field for indicating that an HARQ is to be activated or deactivated;
the determination module includes:
a first determination sub-module configured to: in the case that the first bit field indicates that the HARQ is to be activated, determine that the data packet scheduled by the scheduling information adopts the HARQ mechanism; or in the case that the first bit field indicates that the HARQ is to be deactivated, determine that the data packet scheduled by the scheduling information does not adopt the HARQ mechanism.

In a possible embodiment of the present disclosure, the scheduling information includes a second bit field for indicating an HARQ process number;
the determination module includes:
a second determination sub-module configured to: in the case that a value of the second bit field is a preset target value indicating that the HARQ is to be deactivated, determine that the data packet scheduled by the scheduling information does not adopt the HARQ mechanism; or in the case that the value of the second bit field is not the target value, determine that the data packet scheduled by the scheduling information adopts the HARQ mechanism.

In a possible embodiment of the present disclosure, the device further includes:
a first obtaining sub-module configured to obtain a scrambling value for scrambling the scheduling information;
in the case that the scrambling value is a preset value, when the value of the second bit field is the target value, the data packet scheduled by the scheduling information does not adopt the HARQ mechanism, and when the value of the second bit field is not the target value, the data packet scheduled by the scheduling information adopts the HARQ mechanism.

In a possible embodiment of the present disclosure, the determination module includes:
a second obtaining sub-module configured to obtain an HARQ process indicated by the scheduling information; and
a fourth determination sub-module configured to, in the case that the HARQ process indicated by the scheduling information belongs to an HARQ process set for activating the HARQ, determine that the data packet scheduled by the scheduling information adopts the HARQ mechanism, or in the case that the HARQ process indicated by the scheduling information belongs to an HARQ process set for deactivating the HARQ, determine that the data packet scheduled by the scheduling information does not adopt the HARQ mechanism.

In a possible embodiment of the present disclosure, the device further includes:
an information obtaining module configured to obtain any of the following information configured semi-statically:
an HARQ process number in the HARQ process set for activating the HARQ and an HARQ process number in the HARQ process set for deactivating the HARQ;
an HARQ process number in the HARQ process set for activating the HARQ;
an HARQ process number in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set.

In a possible embodiment of the present disclosure, the determination module includes:
a fifth determination sub-module configured to: determine whether the data packet scheduled by the scheduling information adopts the HARQ mechanism in accordance with a scrambling value for scrambling the scheduling information; or determine whether the data packet scheduled by the scheduling information adopts the HARQ mechanism in accordance with a search space where the scheduling information is located; or determine whether the data packet scheduled by the scheduling information adopts the HARQ mechanism in accordance with a format of the scheduling information; or determine whether the data packet scheduled by the scheduling information adopts the HARQ mechanism in accordance with a length of the scheduling information.

In a possible embodiment of the present disclosure, in the case that the data packet scheduled by the scheduling information does not adopt the HARQ mechanism, a receiver receiving the data packet does not perform HARQ feedback with respect to the data packet.

In a word, whether the HARQ function is activated or deactivated for the data packet scheduled by the scheduling information is indicated dynamically through the scheduling information. As a result, it is able for each data packet to dynamically select whether to adopt the HARQ mechanism, thereby to improve the transmission flexibility of the data packet.

It should be appreciated that, the device in the embodiments of the present disclosure is a device capable of executing the above-mentioned method for processing the HARQ mechanism, so all the embodiments involving the method are applicable to the device with a same or similar beneficial effect.

The present disclosure further provides in some embodiments a computer-readable storage medium storing therein a computer program. The computer program is executed by a processor so as to implement the above-mentioned method for processing the HARQ mechanism with a same technical effect, which will not be particularly further defined herein. The computer-readable storage medium may be a Read-Only Memory (ROM), a Random Access Memory (RAM), a magnetic disk or an optical disk.

As shown in Fig.3, the present disclosure further provides in some embodiments a network side device, which includes a transceiver 320, a memory 310, a processor 300, and a computer program stored in the memory 310 and executed by the processor 300, the transceiver 320 is configured to:
transmit scheduling information, wherein the scheduling information is used to schedule the transmission of a data packet and indicate whether the scheduled data packet adopts an HARQ mechanism.

In a possible embodiment of the present disclosure, the scheduling information includes a first bit field for indicating that an HARQ is to be activated or deactivated;
in the case that the first bit field indicates that the HARQ is to be activated, the data packet scheduled by the scheduling information adopts the HARQ mechanism;
in the case that the first bit field indicates that the HARQ is to be deactivated, the data packet scheduled by the scheduling information does not adopt the HARQ mechanism.

In a possible embodiment of the present disclosure, the scheduling information includes a second bit field for indicating an HARQ process number;
in the case that a value of the second bit field is a preset target value indicating that the HARQ is to be deactivated, the data packet scheduled by the scheduling information does not adopt the HARQ mechanism;
in the case that the value of the second bit field is not the target value, the data packet scheduled by the scheduling information adopts the HARQ mechanism.

In a possible embodiment of the present disclosure, the processor 300 is configured to semi-statically configure any of the following information:
an HARQ process number in an HARQ process set for activating the HARQ and an HARQ process number in a second HARQ process set for deactivating the HARQ;
an HARQ process number in the HARQ process set for activating the HARQ;
an HARQ process number in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set,
in the case that the HARQ process indicated by the scheduling information belongs to the HARQ process set for activating the HARQ, the data packet scheduled by the scheduling information adopts the HARQ mechanism, and
in the case that the HARQ process indicated by the scheduling information belongs to the HARQ process set for deactivating the HARQ, the data packet scheduled by the scheduling information does not adopt the HARQ mechanism.

In a possible embodiment of the present disclosure,
whether the data packet scheduled by the scheduling information adopts the HARQ mechanism is indicated through a scrambling value scrambling the scheduling information; or
whether the data packet scheduled by the scheduling information adopts the HARQ mechanism is indicated through a search space where the scheduling information is located; or
whether the data packet scheduled by the scheduling information adopts the HARQ mechanism is indicated through a format of the scheduling information; or
whether the data packet scheduled by the scheduling information adopts the HARQ mechanism is indicated through a length of the scheduling information.

In a possible embodiment of the present disclosure, the processor 300 is further configured to,
in the case that the data packet scheduled by the scheduling information does not adopt the HARQ mechanism, configure an information field associated with the HARQ in the scheduling information for other uses.

In a possible embodiment of the present disclosure, in the case that the data packet scheduled by the scheduling information does not adopt the HARQ mechanism, a receiver receiving the data packet does not perform HARQ feedback with respect to the data packet.

In a word, whether the HARQ function is activated or deactivated for the data packet scheduled by the scheduling information is indicated dynamically through the scheduling information. As a result, it is able for each data packet to dynamically select whether to adopt the HARQ mechanism, thereby to improve the transmission flexibility of the data packet.

It should be appreciated that, the network side device in the embodiments of the present disclosure is a network side device capable of executing the above-mentioned method for indicating the HARQ mechanism, so all the embodiments involving the method are applicable to the network side device with a same or similar beneficial effect.

As shown in Fig.5, the present disclosure further provides in some embodiments a device for indicating an HARQ mechanism for a network side device, which includes:
a transmission module 51 configured to transmit scheduling information, wherein the scheduling information is used to schedule the transmission of a data packet and indicate whether the scheduled data packet adopts the HARQ mechanism.

In a possible embodiment of the present disclosure, the scheduling information includes a first bit field for indicating that an HARQ is to be activated or deactivated;
in the case that the first bit field indicates that the HARQ is to be activated, the data packet scheduled by the scheduling information adopts the HARQ mechanism;
in the case that the first bit field indicates that the HARQ is to be deactivated, the data packet scheduled by the scheduling information does not adopt the HARQ mechanism.

In a possible embodiment of the present disclosure, the scheduling information includes a second bit field for indicating an HARQ process number;
in the case that a value of the second bit field is a preset target value indicating that the HARQ is to be deactivated, the data packet scheduled by the scheduling information does not adopt the HARQ mechanism; and
in the case that the value of the second bit field is not the target value, the data packet scheduled by the scheduling information adopts the HARQ mechanism.

In a possible embodiment of the present disclosure, the device further includes:
a configuration module configured to semi-statically configure any of the following information:
an HARQ process number in an HARQ process set for activating the HARQ and an HARQ process number in a second HARQ process set for deactivating the HARQ;
an HARQ process number in the HARQ process set for activating the HARQ;
an HARQ process number in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set,
in the case that the HARQ process indicated by the scheduling information belongs to the HARQ process set for activating the HARQ, the data packet scheduled by the scheduling information adopts the HARQ mechanism; and
in the case that the HARQ process indicated by the scheduling information belongs to the HARQ process set for deactivating the HARQ, the data packet scheduled by the scheduling information does not adopt the HARQ mechanism.

In a possible embodiment of the present disclosure,
whether the data packet scheduled by the scheduling information adopts the HARQ mechanism is indicated through a scrambling value scrambling the scheduling information; or
whether the data packet scheduled by the scheduling information adopts the HARQ mechanism is indicated through a search space where the scheduling information is located; or
whether the data packet scheduled by the scheduling information adopts the HARQ mechanism is indicated through a format of the scheduling information; or
whether the data packet scheduled by the scheduling information adopts the HARQ mechanism is indicated through a length of the scheduling information.

In a possible embodiment of the present disclosure, the device further includes:
an information configuration module configured to, in the case that the data packet scheduled by the scheduling information does not adopt the HARQ mechanism, configure an information field associated with the HARQ in the scheduling information for other uses.

In a possible embodiment of the present disclosure, in the case that the data packet scheduled by the scheduling information does not adopt the HARQ mechanism, a receiver receiving the data packet does not perform HARQ feedback with respect to the data packet.

In a word, whether the HARQ function is activated or deactivated for the data packet scheduled by the scheduling information is indicated dynamically through the scheduling information. As a result, it is able for each data packet to dynamically select whether to adopt the HARQ mechanism, thereby to improve the transmission flexibility of the data packet.

It should be appreciated that, the device in the embodiments of the present disclosure is a device capable of executing the above-mentioned method for indicating the HARQ mechanism, so all the embodiments involving the method are applicable to the device with a same or similar beneficial effect.

The present disclosure further provides in some embodiments a computer-readable storage medium storing therein a computer program. The computer program is executed by a processor so as to implement the above-mentioned method for indicating the HARQ mechanism with a same technical effect, which will not be particularly further defined herein. The computer-readable storage medium is an ROM, an RAM, a magnetic disk or an optical disk.

It should be appreciated that, in the context, such words as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

Through the above-mentioned description, it may be apparent for a person skilled in the art that the present disclosure may be implemented by software as well as a necessary common hardware platform, or by hardware, and the former may be better in most cases. Based on this, the technical solutions of the present disclosure, partial or full, or parts of the technical solutions of the present disclosure contributing to the related art, may appear in the form of software products, which may be stored in a storage medium (e.g., ROM/RAM, magnetic disk or optical disk) and include several instructions so as to enable a terminal device (mobile phone, computer, server, air conditioner or network device) to execute the method in the embodiments of the present disclosure.

The description has been given hereinabove in conjunction with the drawings and the embodiments, but the present disclosure shall not be limited to the above preferred embodiments. These embodiments are for illustrative purposes only, but shall not be used to limit the scope of the present disclosure.

## Claims

1. A method for processing a Hybrid Automatic Repeat reQuest, HARQ, mechanism for a terminal, comprising:
receiving (11) scheduling information, wherein the scheduling information is used to schedule transmission of a data packet; and
determining (12) whether the data packet scheduled by the scheduling information is to be transmitted through the HARQ mechanism in accordance with the scheduling information,
**characterized in that** the determining whether the data packet scheduled by the scheduling information is to be transmitted through the HARQ mechanism in accordance with the scheduling information comprises:
obtaining an HARQ process indicated by the scheduling information;
in the case that an HARQ process number of the HARQ process indicated by the scheduling information belongs to an HARQ process set for activating the HARQ, determining that the data packet scheduled by the scheduling information is to be transmitted through the HARQ mechanism;
in the case that the HARQ process number of the HARQ process indicated by the scheduling information belongs to an HARQ process set for deactivating the HARQ, determining that the data packet scheduled by the scheduling information is not to be transmitted through the HARQ mechanism;
wherein the HARQ process set for activating the HARQ and the HARQ process set for deactivating the HARQ are configured by a network side device, the HARQ process set for activating the HARQ and the HARQ process set for deactivating the HARQ each comprises a plurality of HARQ process numbers.

2. The method according to claim 1, further comprising:
obtaining any of the following information configured semi-statically:
the plurality of HARQ process numbers in the HARQ process set for activating the HARQ, and the plurality of HARQ process numbers in the HARQ process set for deactivating the HARQ;
the plurality of HARQ process numbers in the HARQ process set for activating the HARQ;
the plurality of HARQ process numbers in the HARQ process set for deactivating the HARQ;
the quantity of HARQ processes in the HARQ process set for activating the HARQ;
the quantity of HARQ processes in the HARQ process set for deactivating the HARQ;
a maximum quantity of transmission times for the HARQ process in each HARQ process set.

3. The method according to claim 1, wherein the determining whether the data packet scheduled by the scheduling information is to be transmitted through the HARQ mechanism in accordance with the scheduling information further comprises:
determining whether the data packet scheduled by the scheduling information is to be transmitted through the HARQ mechanism in accordance with a scrambling value for scrambling the scheduling information; or
determining whether the data packet scheduled by the scheduling information is to be transmitted through the HARQ mechanism in accordance with a search space where the scheduling information is located; or
determining whether the data packet scheduled by the scheduling information is to be transmitted through the HARQ mechanism in accordance with a format of the scheduling information; or
determining whether the data packet scheduled by the scheduling information is to be transmitted through the HARQ mechanism in accordance with a length of the scheduling information.

4. The method according to claim 1, wherein
in the case that the data packet scheduled by the scheduling information is not to be transmitted through the HARQ mechanism, a receiver receiving the data packet does not perform HARQ feedback with respect to the data packet.

5. A method for indicating a Hybrid Automatic Repeat reQuest, HARQ, mechanism for a network side device, comprising:
transmitting (21) scheduling information, wherein the scheduling information is used to schedule transmission of a data packet and indicate whether the scheduled data packet is to be transmitted through the HARQ mechanism,
in the case that an HARQ process number of an HARQ process indicated by the scheduling information belongs to an HARQ process set for activating the HARQ, the data packet scheduled by the scheduling information is to be transmitted through the HARQ mechanism; in the case that the HARQ process number of the HARQ process indicated by the scheduling information belongs to an HARQ process set for deactivating the HARQ, the data packet scheduled by the scheduling information is not to be transmitted through the HARQ mechanism;
wherein the HARQ process set for activating the HARQ and the HARQ process set for deactivating the HARQ are configured by the network side device, the HARQ process set for activating the HARQ and the HARQ process set for deactivating the HARQ each comprises a plurality of HARQ process numbers.

6. The method according to claim 5, further comprising semi-statically configuring any of the following information:
the plurality of HARQ process numbers in the HARQ process set for activating the HARQ, and the plurality of HARQ process numbers in a second HARQ process set for deactivating the HARQ;
the plurality of HARQ process numbers in the HARQ process set for activating the HARQ;
the plurality of HARQ process numbers in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set.

7. The method according to claim 5, wherein
whether the data packet scheduled by the scheduling information is to be transmitted through the HARQ mechanism is indicated through a scrambling value scrambling the scheduling information; or
whether the data packet scheduled by the scheduling information is to be transmitted through the HARQ mechanism is indicated through a search space where the scheduling information is located; or
whether the data packet scheduled by the scheduling information is to be transmitted through the HARQ mechanism is indicated through a format of the scheduling information; or
whether the data packet scheduled by the scheduling information is to be transmitted through the HARQ mechanism is indicated through a length of the scheduling information.

8. A terminal, comprising a transceiver (320), a memory (310), a processor (300), and a computer program stored in the memory (310) and capable of being executed by the processor (300);
the transceiver (320) is configured to receive scheduling information, the scheduling information is used to schedule the transmission of a data packet;
the processor (300) is configured to read the computer program in the memory (310) to: determine whether the data packet scheduled by the scheduling information is to be transmitted through a Hybrid Automatic Repeat reQuest, HARQ, mechanism in accordance with the scheduling information,
**characterized in that** the processor (300) is further configured to:
obtain an HARQ process indicated by the scheduling information;
in the case that an HARQ process number of the HARQ process indicated by the scheduling information belongs to an HARQ process set for activating the HARQ, determine that the data packet scheduled by the scheduling information is to be transmitted through the HARQ mechanism; and
in the case that the HARQ process number of the HARQ process indicated by the scheduling information belongs to an HARQ process set for deactivating the HARQ, determine that the data packet scheduled by the scheduling information is not to be transmitted through the HARQ mechanism;
wherein the HARQ process set for activating the HARQ and the HARQ process set for deactivating the HARQ are configured by a network side device, the HARQ process set for activating the HARQ and the HARQ process set for deactivating the HARQ each comprises a plurality of HARQ process numbers.

9. The terminal according to claim 8, wherein the transceiver (320) is further configured to:
obtain any of the following information configured semi-statically:
the plurality of HARQ process numbers in the HARQ process set for activating the HARQ, and the plurality of HARQ process numbers in the HARQ process set for deactivating the HARQ;
the plurality of HARQ process numbers in the HARQ process set for activating the HARQ;
the plurality of HARQ process numbers in the HARQ process set for deactivating the HARQ;
the quantity of HARQ processes in the HARQ process set for activating the HARQ;
the quantity of HARQ processes in the HARQ process set for deactivating the HARQ; and
a maximum quantity of transmission times for the HARQ process in each HARQ process set.

## Patentansprüche

1. Verfahren zum Verarbeiten eines Hybrid-Automatic-Repeat-reQuest-(HARQ)-Mechanismus für ein Endgerät, das umfasst:
Empfangen (11) einer Planungsinformation, wobei die Planungsinformation zum Planen der Übertragung eines Datenpakets verwendet wird; und
Bestimmen (12), ob das durch die Planungsinformation geplante Datenpaket gemäß der Planungsinformation über den HARQ-Mechanismus übertragen werden soll,
**dadurch gekennzeichnet, dass** das Bestimmen, ob das durch die Planungsinformation geplante Datenpaket gemäß der Planungsinformation über den HARQ-Mechanismus übertragen werden soll, umfasst:
Erhalten eines durch die Planungsinformation angegebenen HARQ-Prozesses;
wenn eine HARQ-Prozessnummer des durch die Planungsinformation angegebenen HARQ-Prozesses zu einem HARQ-Prozesssatz zum Aktivieren des HARQ gehört, Bestimmen, dass das durch die Planungsinformation geplante Datenpaket über den HARQ-Mechanismus übertragen werden soll;
wenn die HARQ-Prozessnummer des durch die Planungsinformation angegebenen HARQ-Prozesses zu einem HARQ-Prozesssatz zum Deaktivieren des HARQ gehört, Bestimmen, dass das durch die Planungsinformation geplante Datenpaket nicht über den HARQ-Mechanismus übertragen werden soll;
wobei der HARQ-Prozesssatz zum Aktivieren des HARQ und der HARQ-Prozesssatz zum Deaktivieren des HARQ durch eine netzseitige Vorrichtung konfiguriert werden und der HARQ-Prozesssatz zum Aktivieren des HARQ und der HARQ-Prozesssatz zum Deaktivieren des HARQ jeweils eine Vielzahl von HARQ-Prozessnummern aufweisen.

2. Verfahren nach Anspruch 1, das ferner umfasst:
Erhalten einer der folgenden semistatisch konfigurierten Informationen:
der Vielzahl von HARQ-Prozessnummern in dem HARQ-Prozesssatz zum Aktivieren des HARQ und der Vielzahl von HARQ-Prozessnummern in dem HARQ-Prozesssatz zum Deaktivieren des HARQ;
der Vielzahl von HARQ-Prozessnummern in dem HARQ-Prozesssatz zum Aktivieren des HARQ;
der Vielzahl von HARQ-Prozessnummern in dem HARQ-Prozesssatz zum Deaktivieren des HARQ;
der Anzahl von HARQ-Prozessen in dem HARQ-Prozesssatz zum Aktivieren des HARQ;
der Anzahl von HARQ-Prozessen in dem HARQ-Prozesssatz zum Deaktivieren des HARQ;
einer maximalen Anzahl von Übertragungen für den HARQ-Prozess in jedem HARQ-Prozesssatz.

3. Verfahren nach Anspruch 1, wobei das Bestimmen, ob das durch die Planungsinformation geplante Datenpaket gemäß der Planungsinformation über den HARQ-Mechanismus übertragen werden soll, ferner umfasst:
Bestimmen, ob das durch die Planungsinformation geplante Datenpaket gemäß einem Verwürfelungswert zum Verwürfeln der Planungsinformation über den HARQ-Mechanismus übertragen werden soll; oder
Bestimmen, ob das durch die Planungsinformation geplante Datenpaket gemäß einem Suchraum, in dem sich die Planungsinformation befindet, über den HARQ-Mechanismus übertragen werden soll; oder
Bestimmen, ob das durch die Planungsinformation geplante Datenpaket gemäß einem Format der Planungsinformation über den HARQ-Mechanismus übertragen werden soll; oder
Bestimmen, ob das durch die Planungsinformation geplante Datenpaket gemäß einer Länge der Planungsinformation über den HARQ-Mechanismus übertragen werden soll.

4. Verfahren nach Anspruch 1, wobei
wenn das durch die Planungsinformation geplante Datenpaket nicht über den HARQ-Mechanismus übertragen werden soll, ein Empfänger, der das Datenpaket empfängt, keine HARQ-Rückmeldung in Bezug auf das Datenpaket durchführt.

5. Verfahren zum Angeben eines Hybrid-Automatic-Repeat-reQuest-(HARQ)-Mechanismus für eine netzseitige Vorrichtung, das umfasst:
Übertragen (21) einer Planungsinformation, wobei die Planungsinformation zum Planen der Übertragung eines Datenpakets und zum Angeben, ob das geplante Datenpaket über den HARQ-Mechanismus übertragen werden soll, verwendet wird, wobei, wenn eine HARQ-Prozessnummer eines durch die Planungsinformation angegebenen HARQ-Prozesses zu einem HARQ-Prozesssatz zum Aktivieren des HARQ gehört, das durch die Planungsinformation geplante Datenpaket über den HARQ-Mechanismus übertragen werden soll; wobei, wenn die HARQ-Prozessnummer des durch die Planungsinformation angegebenen HARQ-Prozesses zu einem HARQ-Prozesssatz zum Deaktivieren des HARQ gehört, das durch die Planungsinformation geplante Datenpaket nicht über den HARQ-Mechanismus übertragen werden soll;
wobei der HARQ-Prozesssatz zum Aktivieren des HARQ und der HARQ-Prozesssatz zum Deaktivieren des HARQ durch die netzseitige Vorrichtung konfiguriert werden und der HARQ-Prozesssatz zum Aktivieren des HARQ und der HARQ-Prozesssatz zum Deaktivieren des HARQ jeweils eine Vielzahl von HARQ-Prozessnummern aufweisen.

6. Verfahren nach Anspruch 5, das ferner das semistatische Konfigurieren einer der folgenden Informationen umfasst:
der Vielzahl von HARQ-Prozessnummern in dem HARQ-Prozesssatz zum Aktivieren des HARQ und der Vielzahl von HARQ-Prozessnummern in einem zweiten HARQ-Prozesssatz zum Deaktivieren des HARQ;
der Vielzahl von HARQ-Prozessnummern in dem HARQ-Prozesssatz zum Aktivieren des HARQ;
der Vielzahl von HARQ-Prozessnummern in dem HARQ-Prozesssatz zum Deaktivieren des HARQ;
der Anzahl von HARQ-Prozessen in dem HARQ-Prozesssatz zum Aktivieren des HARQ;
der Anzahl von HARQ-Prozessen in dem HARQ-Prozesssatz zum Deaktivieren des HARQ; und
einer maximalen Anzahl von Übertragungen für den HARQ-Prozess in jedem HARQ-Prozesssatz.

7. Verfahren nach Anspruch 5, wobei
durch einen Verwürfelungswert, der die Planungsinformation verwürfelt, angegeben wird, ob das durch die Planungsinformation geplante Datenpaket über den HARQ-Mechanismus übertragen werden soll; oder
durch einen Suchraum, in dem sich die Planungsinformation befindet, angegeben wird, ob das durch die Planungsinformation geplante Datenpaket über den HARQ-Mechanismus übertragen werden soll; oder
durch ein Format der Planungsinformation angegeben wird, ob das durch die Planungsinformation geplante Datenpaket über den HARQ-Mechanismus übertragen werden soll; oder
durch eine Länge der Planungsinformation angegeben wird, ob das durch die Planungsinformation geplante Datenpaket über den HARQ-Mechanismus übertragen werden soll.

8. Endgerät, das einen Sendeempfänger (320), einen Speicher (310), einen Prozessor (300) und ein in dem Speicher (310) gespeichertes und durch den Prozessor (300) ausführbares Computerprogramm aufweist;
wobei der Sendeempfänger (320) dazu konfiguriert ist, eine Planungsinformation zu empfangen, wobei die Planungsinformation zum Planen der Übertragung eines Datenpakets verwendet wird;
wobei der Prozessor (300) dazu konfiguriert ist, das Computerprogramm in dem Speicher (310) auszulesen, um zu bestimmen, ob das durch die Planungsinformation geplante Datenpaket gemäß der Planungsinformation über einen Hybrid-Automatic-Repeat-reQuest-(HARQ)-Mechanismus übertragen werden soll,
**dadurch gekennzeichnet, dass** der Prozessor (300) ferner dazu konfiguriert ist:
einen durch die Planungsinformation angegebenen HARQ-Prozess zu erhalten;
wenn eine HARQ-Prozessnummer des durch die Planungsinformation angegebenen HARQ-Prozesses zu einem HARQ-Prozesssatz zum Aktivieren des HARQ gehört, zu bestimmen, dass das durch die Planungsinformation geplante Datenpaket über den HARQ-Mechanismus übertragen werden soll; und
wenn die HARQ-Prozessnummer des durch die Planungsinformation angegebenen HARQ-Prozesses zu einem HARQ-Prozesssatz zum Deaktivieren des HARQ gehört, zu bestimmen, dass das durch die Planungsinformation geplante Datenpaket nicht über den HARQ-Mechanismus übertragen werden soll;
wobei der HARQ-Prozesssatz zum Aktivieren des HARQ und der HARQ-Prozesssatz zum Deaktivieren des HARQ durch eine netzseitige Vorrichtung konfiguriert werden und der HARQ-Prozesssatz zum Aktivieren des HARQ und der HARQ-Prozesssatz zum Deaktivieren des HARQ jeweils eine Vielzahl von HARQ-Prozessnummern aufweisen.

9. Endgerät nach Anspruch 8, wobei der Sendeempfänger (320) ferner dazu konfiguriert ist:
eine der folgenden semistatisch konfigurierten Informationen zu erhalten:
die Vielzahl von HARQ-Prozessnummern in dem HARQ-Prozesssatz zum Aktivieren des HARQ und die Vielzahl von HARQ-Prozessnummern in dem HARQ-Prozesssatz zum Deaktivieren des HARQ;
die Vielzahl von HARQ-Prozessnummern in dem HARQ-Prozesssatz zum Aktivieren des HARQ;
die Vielzahl von HARQ-Prozessnummern in dem HARQ-Prozesssatz zum Deaktivieren des HARQ;
die Anzahl von HARQ-Prozessen in dem HARQ-Prozesssatz zum Aktivieren des HARQ;
die Anzahl von HARQ-Prozessen in dem HARQ-Prozesssatz zum Deaktivieren des HARQ; und
eine maximale Anzahl von Übertragungen für den HARQ-Prozess in jedem HARQ-Prozesssatz.

## Revendications

1. Procédé de traitement d'un mécanisme de demande de répétition automatique hybride, dite HARQ, pour un terminal, comprenant les étapes consistant à :
recevoir (11) des informations de planification, dans lequel les informations de planification sont utilisées pour planifier une transmission d'un paquet de données ; et
déterminer (12) si le paquet de données planifié par les informations de planification doit être transmis par l'intermédiaire du mécanisme de HARQ conformément aux informations de planification,
**caractérisé en ce que** l'étape de détermination du fait que le paquet de données planifié par les informations de planification doit, ou non, être transmis par l'intermédiaire du mécanisme de HARQ conformément aux informations de planification consiste à :
obtenir un processus de HARQ indiqué par les informations de planification ;
dans le cas dans lequel un nombre de processus de HARQ du processus de HARQ indiqué par les informations de planification appartient à un ensemble de processus de HARQ d'activation de la HARQ, déterminer que le paquet de données planifié par les informations de planification doit être transmis par l'intermédiaire du mécanisme de HARQ ;
dans le cas dans lequel le nombre de processus de HARQ du processus de HARQ indiqué par les informations de planification appartient à un ensemble de processus de HARQ de désactivation de la HARQ, déterminer que le paquet de données planifié par les informations de planification ne doit pas être transmis par l'intermédiaire du mécanisme de HARQ ;
dans lequel l'ensemble de processus de HARQ d'activation de la HARQ et l'ensemble de processus de HARQ de désactivation de la HARQ sont configurés par un dispositif coté réseau, l'ensemble de processus de HARQ d'activation de la HARQ et l'ensemble de processus de HARQ de désactivation de la HARQ comprennent chacun une pluralité de nombres de processus de HARQ.

2. Procédé selon la revendication 1, comprenant en outre l'étape consistant à :
obtenir de quelconques informations des informations suivantes configurées de manière semi-statique :
la pluralité de nombres de processus de HARQ de l'ensemble de processus de HARQ d'activation de la HARQ, et la pluralité de nombres de processus de HARQ de l'ensemble de processus de HARQ de désactivation de la HARQ ;
la pluralité de nombres de processus de HARQ de l'ensemble de processus de HARQ d'activation de la HARQ ;
la pluralité de nombres de processus de HARQ de l'ensemble de processus de HARQ de désactivation de la HARQ ;
la quantité de processus de HARQ de l'ensemble de processus de HARQ d'activation de la HARQ ;
la quantité de processus de HARQ de l'ensemble de processus de HARQ de désactivation de la HARQ ;
une quantité maximale de transmissions du processus de HARQ de chaque ensemble de processus de HARQ.

3. Procédé selon la revendication 1, dans lequel l'étape de détermination du fait que le paquet de données planifié par les informations de planification doit, ou non, être transmis par l'intermédiaire du mécanisme de HARQ conformément aux informations de planification consiste en outre à :
déterminer si le paquet de données planifié par les informations de planification doit être transmis par l'intermédiaire du mécanisme de HARQ conformément à une valeur d'embrouillage d'embrouillage des informations de planification ; ou
déterminer si le paquet de données planifié par les informations de planification doit être transmis par l'intermédiaire du mécanisme de HARQ conformément à un espace de recherche dans lequel sont situées les informations de planification ; ou
déterminer si le paquet de données planifié par les informations de planification doit être transmis par l'intermédiaire du mécanisme de HARQ conformément à un format des informations de planification ; ou
déterminer si le paquet de données planifié par les informations de planification doit être transmis par l'intermédiaire du mécanisme de HARQ conformément à une longueur des informations de planification.

4. Procédé selon la revendication 1, dans lequel
dans le cas dans lequel le paquet de données planifié par les informations de planification ne doit pas être transmis par l'intermédiaire du mécanisme de HARQ, un récepteur recevant le paquet de données ne doit pas effectuer de rétroaction de HARQ par rapport au paquet de données.

5. Procédé d'indication d'un mécanisme de demande de répétition automatique hybride, dite HARQ, pour un dispositif coté réseau, comprenant l'étape consistant à :
transmettre (21) des informations de planification, dans lequel les informations de planification sont utilisées pour planifier une transmission d'un paquet de données et pour indiquer si le paquet de données planifié doit être transmis par l'intermédiaire du mécanisme de HARQ,
dans le cas dans lequel un nombre de processus de HARQ d'un processus de HARQ indiqué par les informations de planification appartient à un ensemble de processus de HARQ d'activation de la HARQ, le paquet de données planifié par les informations de planification doit être transmis par l'intermédiaire du mécanisme de HARQ ; dans le cas dans lequel le nombre de processus de HARQ du processus de HARQ indiqué par les informations de planification appartient à un ensemble de processus de HARQ de désactivation de la HARQ, le paquet de données planifié par les informations de planification ne doit pas être transmis par l'intermédiaire du mécanisme de HARQ ;
dans lequel l'ensemble de processus de HARQ d'activation de la HARQ et l'ensemble de processus de HARQ de désactivation de la HARQ sont configurés par le dispositif côté réseau, l'ensemble de processus de HARQ d'activation de la HARQ et l'ensemble de processus de HARQ de désactivation de la HARQ comprennent chacun une pluralité de nombres de processus de HARQ.

6. Procédé selon la revendication 5, comprenant en outre l'étape consistant à configurer de manière semi-statique de quelconques informations des informations suivantes :
la pluralité de nombres de processus de HARQ de l'ensemble de processus de HARQ d'activation de la HARQ, et la pluralité de nombres de processus de HARQ d'un second ensemble de processus de HARQ de désactivation de la HARQ ;
la pluralité de nombres de processus de HARQ de l'ensemble de processus de HARQ d'activation de la HARQ ;
la pluralité de nombres de processus de HARQ de l'ensemble de processus de HARQ de désactivation de la HARQ ;
la quantité de processus de HARQ de l'ensemble de processus de HARQ d'activation de la HARQ ;
la quantité de processus de HARQ de l'ensemble de processus de HARQ de désactivation de la HARQ ; et
une quantité maximale de transmissions du processus de HARQ de chaque ensemble de processus de HARQ.

7. Procédé selon la revendication 5, dans lequel
le fait que le paquet de données planifié par les informations de planification doive, ou non, être transmis par l'intermédiaire du mécanisme de HARQ est indiqué par l'intermédiaire d'une valeur d'embrouillage embrouillant les informations de planification ; ou
le fait que le paquet de données planifié par les informations de planification doive, ou non, être transmis par l'intermédiaire du mécanisme de HARQ est indiqué par l'intermédiaire d'un espace de recherche dans lequel sont situées les informations de planification ; ou
le fait que le paquet de données planifié par les informations de planification doive, ou non, être transmis par l'intermédiaire du mécanisme de HARQ est indiqué par l'intermédiaire d'un format des informations de planification ; ou
le fait que le paquet de données planifié par les informations de planification doive, ou non, être transmis par l'intermédiaire du mécanisme de HARQ est indiqué par l'intermédiaire d'une longueur des informations de planification.

8. Terminal, comprenant un émetteur-récepteur (320), une mémoire (310), un processeur (300), et un programme d'ordinateur maintenu dans la mémoire (310) et pouvant être exécuté par le processeur (300) ;
l'émetteur-récepteur (320) est configuré pour recevoir des informations de planification, les informations de planification sont utilisées pour planifier la transmission d'un paquet de données ;
le processeur (300) est configuré pour lire le programme d'ordinateur dans la mémoire (310) pour : déterminer si le paquet de données planifié par les informations de planification doit, ou non, être transmis par l'intermédiaire d'un mécanisme de demande de répétition automatique hybride, dite HARQ, conformément aux informations de planification,
**caractérisé en ce que** le processeur (300) est en outre configuré pour :
obtenir un processus de HARQ indiqué par les informations de planification ;
dans le cas dans lequel un nombre de processus de HARQ du processus de HARQ indiqué par les informations de planification appartient à un ensemble de processus de HARQ d'activation de la HARQ, déterminer que le paquet de données planifié par les informations de planification doit être transmis par l'intermédiaire du mécanisme de HARQ ; et
dans le cas dans lequel le nombre de processus de HARQ du processus de HARQ indiqué par les informations de planification appartient à un ensemble de processus de HARQ de désactivation de la HARQ, déterminer que le paquet de données planifié par les informations de planification ne doit pas être transmis par l'intermédiaire du mécanisme de HARQ ;
dans lequel l'ensemble de processus de HARQ d'activation de la HARQ et l'ensemble de processus de HARQ de désactivation de la HARQ sont configurés par un dispositif côté réseau, l'ensemble de processus de HARQ d'activation de la HARQ et l'ensemble de processus de HARQ de désactivation de la HARQ comprennent chacun une pluralité de nombres de processus de HARQ.

9. Terminal selon la revendication 8, dans lequel l'émetteur-récepteur (320) est en outre configuré pour :
obtenir de quelconques informations des informations suivantes configurées de manière semi-statique :
la pluralité de nombres de processus de HARQ de l'ensemble de processus de HARQ d'activation de la HARQ, et la pluralité de nombres de processus de HARQ de l'ensemble de processus de HARQ de désactivation de la HARQ ;
la pluralité de nombres de processus de HARQ de l'ensemble de processus de HARQ d'activation de la HARQ ;
la pluralité de nombres de processus de HARQ de l'ensemble de processus de HARQ de désactivation de la HARQ ;
la quantité de processus de HARQ de l'ensemble de processus de HARQ d'activation de la HARQ ;
la quantité de processus de HARQ de l'ensemble de processus de HARQ de désactivation de la HARQ ; et
une quantité maximale de transmissions du processus de HARQ de chaque ensemble de processus de HARQ.
